# EUROPÄISCHE PATENTSCHRIFT

(11) **EP 1 302 383 B1**
(45) Veröffentlichungstag und Bekanntmachung des Hinweises auf die Patenterteilung: **25.03.2009**
(21) Anmeldenummer: 02022426.7
(22) Anmeldetag: 04.10.2002
(51) Int. Cl.: B62B 3/06

(54) **Hydraulikanlage für ein Flurförderzeug**
Hydraulic system for an industrial truck
Circuit hydraulique pour un chariot de manutention

(30) Priorität: 09.10.2001 DE 10149788
(43) Veröffentlichungstag der Anmeldung: 16.04.2003
(73) Patentinhaber: STILL SAS, 77716 Marne La Vallée Cedex 4 (FR)
(72) Erfinder: Fortin, Dominique, 60160 Montataire (FR); Bimont, Cyril, 60940 St Vaast-Angicourt (FR); Alegre, Jean-Pierre, 60150 Thourotte (FR); Garcia, David, 60500 Chantilly (FR)
(74) Vertreter: Geirhos, Johann

(56) Entgegenhaltungen:
- GB-A- 988 600
- US-A- 2 789 648
- US-A- 3 462 167
- US-A- 4 589 669

## Beschreibung

Die Erfindung betrifft ein Flurförderzeug mit mindestens einem hydraulischen Aggregat, wobei aus einem Fahrzeugrahmen ein Behälter für Hydraulikflüssigkeit ausgebildet ist.

Flurförderzeuge sind in der Regel mit einem Fahrantrieb und Nebenaggregaten ausgerüstet. Als Nebenaggregate können üblicherweise eine hydraulische Lenkvorrichtung, eine hydraulische Hubvorrichtung und gegebenenfalls hydraulisch angetriebene Zusatzfunktionen der Hubvorrichtung vorgesehen sein. Die hydraulischen Verbraucher sind über eine Förderleitung mit der Hydraulikpumpe verbunden.

Herkömmlicherweise ist die Hydraulikpumpe über ein Saugrohr mit einem drucklosen Tank, der Hydraulikflüssigkeit enthält, verbunden. Benötigt einer der hydraulischen Verbraucher Hydraulikflüssigkeit, wird diese mittels des Saugrohrs aus dem Tank angesaugt und mittels der Hydraulikpumpe weitergefördert. Damit bei diesem Vorgang in dem Tank kein Unterdruck entsteht, weist dieser eine Belüftungsöffnung auf, die mit einem Filter versehen sein kann. Dieser Filter wird bei einem Entweichen oder Einströmen von Luft aus bzw. in den Tank zwangsweise durchströmt.

Für das Funktionieren der Hubvorrichtung eines Flurförderzeugs wird ein Hydraulikzylinder benötigt, der bei bisher bekannten Ausführungen mindestens zweiteilig ausgeführt ist. An den oberen Teil des Zylinders, das sogenannte Zylinderrohr, ist ein Zylinderboden angeschweißt. Zylinderboden und Zylinderrohr bilden eine Zylinderkammer, in der sich die Hydraulikflüssigkeit befindet, die je nach der Lage des Kolbens von diesem verdrängt wird oder in die Zylinderkammer hineinströmt. Aus diesen Strömungsbewegungen resultiert das Heben und Senken des Lastträgers der Flurförderzeuge.

Im Zusammenhang mit der vorliegenden Erfindung wird die Zylinderkammer eines Hydraulikzylinders ebenso wie der Tank als Behälter bezeichnet.

Insgesamt gesehen werden für die Hydraulikanlage mit ihrer Pumpe und ihren Zylindern zahlreiche Bauteile und auch viele Arbeitsgänge benötigt, um die Hydraulikanlage zusammen zu setzen. Zudem kommt es durch die nötige Luftzufuhr in den Tank immer wieder zu schädlichen Verschmutzungen der Hydraulikflüssigkeit. Aus der gattungsgemäßen GB 988 600 ist ein Flurförderzeug gemäß den Oberbegriff des Anspruchs 1 bekannt.

Aus der US 3 462 167 ist ein als Handhubwagen ausgebildetes Flurförderzeug bekannt, bei dem in einem Pumpengehäuse, das Bestandteil eines Fahrzeugrahmens ist, ein Pumpenkörper sowie ein Hydraulikzylinder und Verbindungsbohrungen ausgebildet sind. An einen Anschluss des Pumpengehäuses ist ein von einer flexiblen Blase gebildeter Behälter für die Hydraulikflüssigkeit angeschlossen. Zum Schutz des von der flexiblen Blase gebildeten Behälters für die Hydraulikflüssigkeit ist die Blase innerhalb eines Abdeckbleches angeordnet. Das Pumpengehäuse ist hierbei aus Aluminium oder einem Leichtmetall gebildet.

Der Erfindung liegt die Aufgabe zugrunde, eine Hydraulikanlage mit einer minimierten Anzahl an benötigten Bauteilen mit einer einfachen und wenig verschmutzungsanfälligen Anordnung zur Verfügung zu stellen. Gleichzeitig sollen der Arbeitsaufwand verringert und Kosten eingespart sowie der Bauaufwand für den Fahrzeugrahmen verringert werden

Diese Aufgabe wird erfindungsgemäß dadurch gelöst, dass der Fahrzeugrahmen von einem Verbundwerkstoff gebildet ist und der Behälter für Hydraulikflüssigkeit als Bestandteil des Fahrzeugrahmens in den Fahrzeugrahmen integriert ist, wobei zwischen der Hydraulikflüssigkeit und dem Behälter eine flexible Blase angeordnet ist. Eine Fertigung von Fahrzeugrahmen aus Verbundwerkstoffen ist deutlich weniger aufwändig und daher kostengünstiger als die bisherige Stahlblechfertigung. Außerdem können andere Fahrzeugkomponenten an Rahmen aus Verbundwerkstoffen leicht befestigt werden, da schon bei der Herstellung entsprechende Trägerbauteile, wie beispielsweise ein Behälter für die Hydraulikflüssigkeit in den Rahmen integriert werden können. Der Verbundwerkstoff wird hierbei von der Blase gegen ein Eindringen von Hydraulikflüssigkeit geschützt. Der Hauptvorteil dieser Anordnung besteht darin, dass die Anzahl der Bauteile für Hydraulikzylinder minimiert werden können und gleichzeitig eine Verschmutzung der Hydraulikflüssigkeit verhindert wird. Da sich die Blase entsprechend der Menge an Hydraulikflüssigkeit, die sich in ihr befindet zusammenfalten oder ausfalten kann, kommt es innerhalb der Blase nicht zu der Entstehung von Unterdrücken. Es muss daher keine Luft, mit der automatisch auch Schmutz in die Hydraulikflüssigkeit geraten kann, in die Blase einströmen oder aus ihr herausströmen.

Weiterhin ist es zweckmäßig, wenn der Behälter als druckloser Behälter, insbesondere als Tank ausgebildet ist. Dabei wird der Behälter als Reservoir für die Hydraulikflüssigkeit verwendet.

Wird an die Oberkante des Behälters eine Hydraulikpumpe angeschlossen, so kann der Behälter als Tank für die Hydraulikanlage eines Flurförderzeugs benutzt werden.

Dazu ist es vorteilhaft, wenn sich von der Hydraulikpumpe ein Saugrohr nach unten in die Blase erstreckt. Die von dem Saugrohr angesaugte Hydraulikflüssigkeit wird weiter zu der Hydraulikpumpe transportiert, von wo aus sie dann an die jeweils benötigte Stelle in der Hydraulikanlage gefördert wird.

Es ist weiterhin zweckmäßig, wenn eine Belüftungsöffnung vorgesehen ist, die das Eintreten von Luft in den Bereich zwischen dem Behälter und der Blase ermöglicht. Beim Ansaugen von Hydraulikflüssigkeit mittels des Saugrohrs zieht sich die Blase zusammen und es strömt Luft in den frei gewordenen Zwischenraum zwischen Blase und Behälter. Wird die Hydraulikflüssigkeit nach ihrem Gebrauch wieder zurück in die Blase befördert, muss die Luft wieder aus dem Zwischenraum entweichen, was mit Hilfe der Belüftungsöffnung möglich ist.

Eine weitere zweckmäßige Ausgestaltung ergibt sich, wenn der Behälter als Druckbehälter, insbesondere als Teil eines Hydraulikzylinders ausgebildet ist. Die bereits in den Rahmen integrierte Behälter mit seiner flexiblen Blase ersetzt dabei den herkömmlichen Zylinderboden. Die aufgrund der Hydraulikdrücke auftretenden Kräfte werden von dem Fahrzeugrahmen aufgenommen während die Blase im Behälter der Abdichtung dient. Es kann also ein Bauteil des Hydraulikzylinders eingespart werden.

Um eine Führung des Kolbens des Hydraulikzylinders zu gewährleisten, ist es nützlich, wenn an die Oberkante des Behälters ein metallisches Zylinderbauteil angeschlossen ist. Bei der Auf- und Abbewegung des Kolbens wird dieser auch über die Oberkante des Behälters hinausbewegt und benötigt dabei eine formstabile Führung in Form des metallischen Zylinderbauteils.

Aus den oben genannten Gründen ist es auch vorteilhaft, wenn sich ein Kolben des Hydraulikzylinders in abgesenktem Zustand zumindest teilweise innerhalb des Behälters befindet.

Von Vorteil ist es ebenso, wenn der Behälter und die Blase derart angeordnet sind, dass ein Inkontakttreten der Hydraulikflüssigkeit mit Luft im Bereich des Behälters verhindert ist. Ein Eintreten von in der Luft enthaltenen Schmutzpartikeln in die Hydraulikflüssigkeit wird damit unterbunden.

Weitere Vorteile und Einzelheiten der Erfindung werden anhand von in den Zeichnungen dargestellten Ausführungsbeispielen näher erläutert. Hierbei zeigt
- Figur 1: eine erfindungsgemäße Hydraulikanlage mit einer Hydraulikpumpe,
- Figur 2: eine erfindungsgemäße Hydraulikanlage mit einem Hydraulikzylinder.

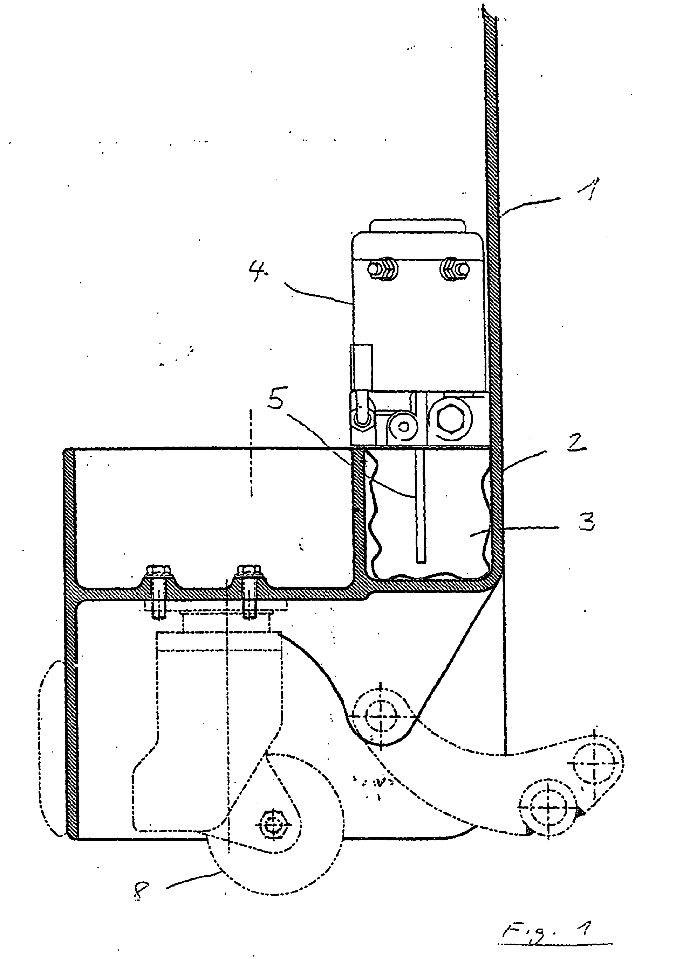

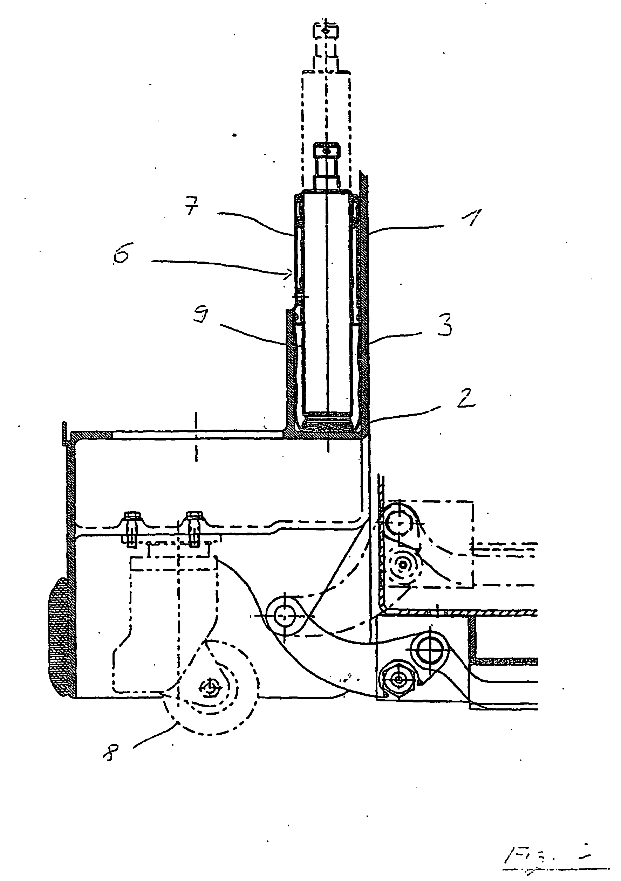

Die Figuren 1 und 2 zeigen verschiedene Ausgestaltungsformen für eine erfindungsgemäße Hydraulikanlage im Längsschnitt eines als Niederhubwagen ausgeführten Flurförderzeugs. Die gesamte geschnittene Fläche eines Fahrzeugrahmens 1 ist schraffiert dargestellt. Ein Antriebsrad 8 ist über ein Trägerelement an dem Fahrzeugrahmen 1 befestigt. Auf der rechten Seite der Figuren ist jeweils ein nicht näher dargestellter Lastteil des Flurförderzeugs angedeutet.

Die Figur 1 zeigt einen Behälter 2 für Hydraulikflüssigkeit. Der Behälter 2 ist mit einer flexiblen Blase 3, die sich zusammenfalten und ausfalten kann, ausgekleidet. Oberhalb des Behälters 2 ist eine Hydraulikpumpe 4 angeordnet, die in einer Hydraulikanlage des Flurförderzeugs alle hydraulischen Aggregate mit Hydraulikflüssigkeit versorgt. Von dem Boden der Hydraulikpumpe 4 erstreckt sich ein Saugrohr 5 in die in der Blase 3 befindliche Hydraulikflüssigkeit

Benötigt ein hydraulischer Verbraucher Hydraulikflüssigkeit, so wird diese mittels des Saugrohrs 5 aus dem Behälter 2 angesaugt und von der Hydraulikpumpe 4 über Hydraulikleitungen zu dem entsprechenden Verbraucher gefördert. Bei diesem Vorgang zieht sich die Blase 3 infolge des Sogs zusammen. Eine nicht dargestellte Belüftungsöffnung im Bereich der Behälters 2 sorgt dafür, dass der dabei frei gewordene Raum zwischen dem Behälter 2 und der Blase 3 mit Luft gefüllt wird. Wird die Hydraulikflüssigkeit von dem Verbraucher nicht mehr benötigt, fließt sie auf demselben Weg wieder zurück in die Blase 3. Diese muss sich, um die Hydraulikflüssigkeit wieder aufnehmen zu können, ausdehnen, wodurch ein Verdrängen der eingedrungenen Luft nötig wird. Dies geschieht ebenfalls über die Belüftungsöffnung.

In der Figur 2 ist ein anderer Abschnitt der Hydraulikanlage dargestellt. Ein Hydraulikzylinder 6 besteht aus einem Kolben 9 und einem metallischen Zylinderbauteil 7. Der Druckraum des Hydraulikzylinders 6 befindet sich im Inneren eines Behälters 2, in welchen der Kolben 9 hineinragt. In der dargestellten Position steht der Kolben 9 am Boden des Behälters 2 an. Bewegt sich der Kolben 9 infolge des Eintritts von Hydraulikflüssigkeit in die Blase 3 nach oben, wird er entlang des metallischen Zylinderbauteils 7 geführt. Diese Position des Kolbens 9 ist gestrichelt dargestellt. Die Blase 3 dient hierbei hauptsächlich der Abdichtung des Fahrzeugrahmens 1 gegenüber der Hydraulikflüssigkeit, da der Verbundwerkstoff, aus dem der Fahrzeugrahmen 1 besteht, gegen die Hydraulikflüssigkeiten nicht beständig ist.

Selbstverständlich können die in den beiden Figuren bezüglich einer Hydraulikanlage gezeigten Ausgestaltungsformen auch in einem einzigen Flurförderzeug gemeinsam integriert werden.

Neben einer geringeren Anzahl an zu montierenden Bauteilen bietet die erfindungsgemäße Hydraulikanlage auch noch Schutz gegen in die Hydraulikflüssigkeit eindringenden Schmutz. Die Erfindung trägt daher zur Kosteneinsparung bei, da Bauteile und Arbeitsgänge vereinfacht werden.

## Patentansprüche

1. Flurförderzeug mit mindestens einem hydraulischen Aggregat, wobei aus einem Fahrzeugrahmen (1) ein Behälter (2) für Hydraulikflüssigkeit ausgebildet ist, **dadurch gekennzeichnet, dass** der Fahrzeugrahmen (1) von einem Verbundwerkstoff gebildet ist und der Behälter (2) für Hydraulikflüssigkeit als Bestandteil des Fahrzeugrahmens (1) in den Fahrzeugrahmen (1) integriert ist, wobei zwischen der Hydraulikflüssigkeit und dem Behälter (2) eine flexible Blase (3) angeordnet ist.

2. Flurförderzeug nach Anspruch 1, **dadurch gekennzeichnet, dass** der Behälter (2) als druckloser Behälter, insbesondere als Tank ausgebildet ist.

3. Flurförderzeug nach Anspruch 2, **dadurch gekennzeichnet, dass** an die Oberkante des Behälters (2) eine Hydraulikpumpe (4) angeschlossen ist.

4. Flurförderzeug nach Anspruch 3, **dadurch gekennzeichnet, dass** sich von der Hydraulikpumpe (4) ein Saugrohr (5) nach unten in die Blase (3) erstreckt.

5. Flurförderzeug nach einem der Ansprüche 1 bis 4, **dadurch gekennzeichnet, dass** eine Belüftungsöffnung vorgesehen ist, die das Eintreten von Luft in den Bereich zwischen dem Behälter (2) und der Blase (3) ermöglicht.

6. Flurförderzeug nach Anspruch 1, **dadurch gekennzeichnet, dass** der Behälter (2) als Druckbehälter, insbesondere als Teil eines Hydraulikzylinders (6) ausgebildet ist.

7. Flurförderzeug nach Anspruch 6, **dadurch gekennzeichnet, dass** an die Oberkante des Behälters (2) ein metallisches Zylinderbauteil (7) angeschlossen ist.

8. Flurförderzeug nach Anspruch 6 oder 7, **dadurch gekennzeichnet, dass** sich ein Kolben (9) des Hydraulikzylinders (6) in abgesenktem Zustand zumindest teilweise innerhalb des Behälters (2) befindet.

9. Flurförderzeug nach einem der Ansprüche 1 bis 8, **dadurch gekennzeichnet, dass** der Behälter (2) und die Blase (3) derart angeordnet sind, dass ein Inkontakttreten der Hydraulikflüssigkeit mit Luft im Bereich des Behälters (2) verhindert ist.

## Claims

1. Industrial truck having at least one hydraulic assembly, a container (2) for hydraulic fluid being formed from a vehicle frame (1), **characterized in that** the vehicle frame (1) is formed from a composite material and the container (2) for hydraulic fluid is integrated into the vehicle frame (1) as a constituent part of the vehicle frame (1), a flexible bladder (3) being arranged between the hydraulic fluid and the container (2).

2. Industrial truck according to Claim 1, **characterized in that** the container (2) is configured as a pressureless container, in particular as a tank.

3. Industrial truck according to Claim 2, **characterized in that** a hydraulic pump (4) is connected to the upper edge of the container (2).

4. Industrial truck according to Claim 3, **characterized in that** a suction pipe (5) extends from the hydraulic pump (4) downwards into the bladder (3).

5. Industrial truck according to one of Claims 1 to 4, **characterized in that** a ventilation opening is provided which makes it possible for air to enter into the region between the container (2) and the bladder (3).

6. Industrial truck according to Claim 1, **characterized in that** the container (2) is configured as a pressure container, in particular as part of a hydraulic cylinder (6).

7. Industrial truck according to Claim 6, **characterized in that** a metallic cylinder component (7) is connected to the upper edge of the container (2).

8. Industrial truck according to Claim 6 or 7, **characterized in that** a piston (9) of the hydraulic cylinder (6) is situated at least partially within the container (2) in the lowered state.

9. Industrial truck according to one of Claims 1 to 8, **characterized in that** the container (2) and the bladder (3) are arranged in such a way that the hydraulic fluid is prevented from coming into contact with air in the region of the container (2).

## Revendications

1. Chariot de manutention comprenant au moins une unité hydraulique, un récipient (2) pour liquide hydraulique étant formé à partir d'un châssis du véhicule (1), **caractérisé en ce que** le châssis du véhicule (1) est formé en un matériau composite et le récipient (2) pour liquide hydraulique est intégré dans le châssis du véhicule (1) sous forme de constituant du châssis du véhicule (1), une vessie flexible (3) étant disposée entre le liquide hydraulique et le récipient (2).

2. Chariot de manutention selon la revendication 1, **caractérisé en ce que** le récipient (2) est réalisé sous forme de récipient sans pression, notamment sous forme de réservoir.

3. Chariot de manutention selon la revendication 2, **caractérisé en ce que** l'on raccorde au côté supérieur du récipient (2) une pompe hydraulique (4).

4. Chariot de manutention selon la revendication 3, **caractérisé en ce qu'**un tube d'aspiration (5) s'étend depuis la pompe hydraulique (4) vers le bas dans la vessie (3).

5. Chariot de manutention selon l'une quelconque des revendications 1 à 4, **caractérisé en ce qu'**il est prévu une ouverture de ventilation qui permet l'entrée d'air dans la région entre le récipient (2) et la vessie (3).

6. Chariot de manutention selon la revendication 1, **caractérisé en ce que** le récipient (2) est réalisé sous forme de récipient sous pression, notamment sous forme de partie d'un cylindre hydraulique (6).

7. Chariot de manutention selon la revendication 6, **caractérisé en ce que** l'on raccorde au niveau du bord supérieur du récipient (2), un composant cylindrique métallique (7).

8. Chariot de manutention selon la revendication 6 ou 7, **caractérisé en ce qu'**un piston (9) du cylindre hydraulique (6) se trouve dans l'état abaissé au moins en partie à l'intérieur du récipient (2).

9. Chariot de manutention selon l'une quelconque des revendications 1 à 8, **caractérisé en ce que** le récipient (2) et la vessie (3) sont disposés de telle sorte qu'une mise en contact du liquide hydraulique avec l'air dans la région du récipient (2) soit évitée.
